(19) Europäisches Patentamt
European Patent Office
Office européen des brevets

(11) **EP 4 674 927 A1**

(12) **EUROPEAN PATENT APPLICATION**
published in accordance with Art. 153(4) EPC

(43) Date of publication:
**07.01.2026 Bulletin 2026/02**

(21) Application number: **24764178.0**

(22) Date of filing: **27.02.2024**

(51) International Patent Classification (IPC):
*C09K 19/60* (2006.01)    *C09K 19/58* (2006.01)
*C09K 19/02* (2006.01)    *G02F 1/1337* (2006.01)
*G02F 1/1347* (2006.01)    *G02F 1/1339* (2006.01)
*B60J 3/04* (2006.01)

(52) Cooperative Patent Classification (CPC):
B60J 3/04; C09K 19/02; C09K 19/58; C09K 19/60;
G02F 1/1337; G02F 1/1339; G02F 1/1347

(86) International application number:
**PCT/KR2024/002536**

(87) International publication number:
**WO 2024/181779 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 KR 20230026100**

(71) Applicant: **LG CHEM, LTD.
Seoul 07336 (KR)**

(72) Inventors:
• **KIM, Jin Hong
Daejeon 34122 (KR)**
• **OH, Dong Hyun
Daejeon 34122 (KR)**
• **LEE, Beom Jin
Daejeon 34122 (KR)**
• **YOU, Jung Sun
Daejeon 34122 (KR)**
• **KIM, Jung Woon
Daejeon 34122 (KR)**
• **GIM, Min Jun
Daejeon 34122 (KR)**
• **MOON, Chan Sik
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LIQUID CRYSTAL COMPOSITION**

(57)    The present application relates to a liquid crystal composition. The liquid crystal composition of the present application can provide a liquid crystal cell and a transmittance variable device having excellent durability as well as excellent see-through performance in a dark state.

[Figure 1]

# Description

[Technical Field]

The present application relates to a liquid crystal composition. The present application claims the benefit of priority based on Korean Patent Application No. 10-2023-0026100 dated February 27, 2023, the disclosure of which is incorporated herein by reference in its entirety.

[Background Art]

A device capable of varying transmittance using a liquid crystal compound or the like is known. For example, in Patent Document 1 (European Patent Publication No. 0022311), a transmittance variable device using a so-called GH cell (guest host cell), to which a liquid crystal host material and a dichroic dye guest are applied, is known. Particularly, in the case of a transmittance variable device applied to a vehicle, one capable of seeing-through in a dark state may be preferable in terms of visibility.

[Disclosure]

[Technical Problem]

The present application relates to a liquid crystal composition which can provide a liquid crystal cell and/or a transmittance variable device having excellent durability as well as excellent see-through performance in a dark state.

[Technical Solution]

The present application relates to a liquid crystal composition. The liquid crystal composition may comprise a liquid crystal material and a dichroic dye. The liquid crystal material may satisfy Equation 1 below.

[Equation 1]

$$Tni / (\Delta n)^2 \geq 12345.7$$

In Equation 1, Tni is a clearing point of the liquid crystal material, and $\Delta n$ is refractive index anisotropy of the liquid crystal material.

When the liquid crystal material satisfying Equation 1 above is used, it is possible to provide a liquid crystal cell and/or a transmittance variable device having excellent durability as well as excellent see-through performance in a dark state. When an object is observed through the liquid crystal cell or the transmittance variable device comprising the liquid crystal composition, the see-through performance may mean the degree to which the object is clearly visible. The durability may mean that the liquid crystal material functions as liquid crystals while maintaining a nematic phase even at high temperatures. Particularly, the durability may be a characteristic required when the liquid crystal cell and/or the transmittance variable device comprising the liquid crystal composition is used in a high temperature environment (e.g., summer, or high temperature areas). This is because when in a high-temperature environment, the liquid crystal material fails to maintain a nematic phase and becomes an isotropic phase, it cannot function as liquid crystals. Particularly, vehicles are likely to be exposed to high temperature environments, the liquid crystal composition can be usefully used in vehicle liquid crystal cells and/or transmittance variable devices.

Equation 1 above defines a value obtained by dividing the Tni of the liquid crystal material by $(\Delta n)^2$ of the liquid crystal material, and the $Tni / (\Delta n)^2$ value may be, specifically, 12,500 or more, 13,000 or more, 13,500 or more, 14,000 or more, 14,500 or more, 15,000 or more, 15,500 or more, 16,000 or more, 16,500 or more, 17,000 or more, 17,500 or more, 18,000 or more, 18,500 or more, 19,000 or more, or 19,500 or more. The upper limit of the $Tni / (\Delta n)^2$ value in Equation 1 above may be, for example, 25,000 or less, 24,000 or less, 23,000 or less, 22,000 or less, 21,000 or less, 20,000 or less, 19,000 or less, 18000 or less, 17,000 or less, or 16,000 or less.

Among the physical properties mentioned in this specification, when the measurement temperature affects the results, the relevant physical property is a physical property measured at room temperature, unless otherwise specified. The term room temperature is a natural temperature without warming or cooling, which is usually a temperature in a range of about 10°C to 30°C, or about 23°C or about 25°C or so. Also, unless specifically stated otherwise in this specification, the unit of temperature is °C. Among the physical properties mentioned in this specification, when the measurement pressure affects the results, the relevant physical property is a physical property measured at normal pressure, unless otherwise specified. The term normal pressure is a natural pressure without pressurization or depressurization, in which usually about 1 atmosphere or so is referred to as the normal pressure.

The liquid crystal material may be a liquid crystal material exhibiting a nematic phase. The nematic phase may mean a liquid crystal phase in which rod-shaped liquid crystal molecules have no location regularity, but are arranged in parallel along the long axis direction of the liquid crystal molecules. The Tni of the liquid crystal material may mean a temperature at which the liquid crystal material undergoes a phase transition from the nematic phase to the isotropic phase.

In one example, the liquid crystal material may have a clearing point (Tni) of 85°C or more. The clearing point (Tni) of the liquid crystal material may specifically be 90°C or more, 95°C or more, 100°C or more, 105°C or more, or 110°C or more. If the clearing point (Tni) of the liquid crystal material is within the above range, it may be advantageous in ensuring excellent see-through performance in a dark state while ensuring durability for vehicles. The upper limit of the clearing point (Tni) of the liquid crystal material may be, for example, 125°C or less, 120°C or less, 115°C or less, 110°C or less, 105°C or less, 100°C or less, 95°C or less, or 90°C or less.

In this specification, the term "refractive index anisotropy" may mean a difference (ne-no) between an abnormal refractive index (ne, extraordinary refractive index) and a normal refractive index (no, ordinary refractive index) of a liquid crystal material. The refractive index anisotropy may be a value measured for light with a wavelength of about 550 nm. In one example, the refractive index anisotropy of the liquid crystal material may be 0.089 or less. The refractive index anisotropy of the liquid crystal material may specifically be 0.085 or less, 0.08 or less, 0.075 or less, 0.07 or less, or 0.068 or less. When the refractive index anisotropy of the liquid crystal material is within the above range, it may exhibit excellent durability as well as excellent see-through performance in a dark state, and it may also be advantageous in lowering a driving voltage. The lower limit of the refractive index anisotropy of the liquid crystal material may be, for example, 0.04 or more, 0.045 or more, 0.05 or more, 0.055 or more, 0.06 or more, 0.065 or more, 0.07 or more, or 0.075 or more.

The liquid crystal material may comprise a liquid crystal compound. The liquid crystal material may comprise the same liquid crystal compound, or may also comprise two or more different types of liquid crystal compounds. The type of liquid crystal compound may be appropriately selected in consideration of the purpose of the present application. In one example, the liquid crystal compound may be a non-reactive liquid crystal compound. The non-reactive liquid crystal compound may mean a liquid crystal compound without any polymerizable group or curable group. The polymerizable group or curable group may be exemplified by an acryloyl group, an acryloyloxy group, a methacryloyl group, a methacryloyloxy group, a carboxyl group, a hydroxy group, a vinyl group, or epoxy group, and the like, but is not limited thereto, and may include known functional groups known as the polymerizable groups or curable groups. In one example, the liquid crystal composition and/or the liquid crystal material may not include a reactive liquid crystal compound.

The liquid crystal material may have dielectric constant anisotropy of a positive number or a negative number. The absolute value of the dielectric constant anisotropy of the liquid crystal material may be appropriately selected in consideration of the purpose of the present application. The term "dielectric constant anisotropy ($\Delta\varepsilon$)" may mean a difference ($\varepsilon// - \varepsilon\perp$) between the horizontal dielectric constant ($\varepsilon//$) and the vertical dielectric constant ($\varepsilon\perp$) of the liquid crystal material. In this specification, the term horizontal dielectric constant ($\varepsilon//$) means a dielectric constant value measured along the direction of an electric field in a state where a voltage is applied so that the director of the liquid crystal material (liquid crystal compound) and the direction of the electric field by the applied voltage are substantially horizontal, and the vertical dielectric constant ($\varepsilon\perp$) means a dielectric constant value measured along the direction of an electric field in a state where a voltage is applied so that the director of the liquid crystal material (liquid crystal compound) and the direction of the electric field by the applied voltage are substantially perpendicular. The dielectric constant anisotropy of the liquid crystal material (liquid crystal compound) may be in a range of 5 to 25.

A dichroic dye may control light transmittance variable characteristics of the liquid crystal composition and/or liquid crystal layer. In this specification, the term "dye" may mean a material capable of intensively absorbing and/or deforming light in at least a part of or all the ranges within a visible light region, for example, within a wavelength range of 400 nm to 700 nm, and the term "dichroic dye" may mean a material capable of anisotropic absorption of light in at least a part of or all the ranges of the visible light region.

As the dichroic dye, for example, a known dye known to have a property capable of being aligned according to the alignment state of the liquid crystal material by the so-called guest host effect may be selected and used. An example of such a dichroic dye includes azo dyes, anthraquinone dyes, methine dyes, azomethine dyes, merocyanine dyes, naphthoquinone dyes, tetrazine dyes, phenylene dyes, quarterrylene dyes, benzothiadiazole dyes, diketopyrrolopyrrole dyes, squaraine dyes or pyromethene dyes, and the like, but the dyes applicable in the present application are not limited thereto.

As the dichroic dye, a dye having a dichroic ratio, that is, a value obtained by dividing the absorption of the polarized light parallel to the long axis direction of the dichroic dye by the absorption of the polarized light parallel to the direction perpendicular to the long axis direction, of 5 or more, 6 or more, or 7 or more, can be used. The dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal composition and/or the liquid crystal layer may be appropriately selected in consideration of the purpose of the present application. For example, the content of the dichroic dye in the liquid crystal composition and/or the liquid crystal layer may be 0.2 wt% or more. The content of the dichroic dye may specifically be 0.5 wt% or more, 1 wt% or more, 2 wt% or more, or 3 wt% or more. The upper limit of the content of the dichroic dye may be, for example, 10 wt% or less, 9 wt% or less, 8 wt% or less, 6 wt% or less, or 5 wt% or less. When the content of the dichroic dye is too small, it may be difficult to express the desired transmittance variable characteristics, and when the content of the dichroic dye is too high, there is a risk of precipitation. Therefore, it may be advantageous that the content of the dichroic dye is within the above range.

The liquid crystal composition may further comprise a chiral agent. The chiral agent may enable the liquid crystal layer to implement a twist orientation state. The chiral agent (or chiral dopant) that can be included in the liquid crystal layer can be used without special limitation if it can induce a desired rotation (twisting) without deteriorating the liquid crystallinity, for example, the nematic regularity. The chiral agent for inducing rotation in the liquid crystal compound needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S-811 commercially available from Merck Co., Ltd., or BASF's LC756 may also be used.

The application rate of the chiral agent is selected so that the desired d/p ratio may be achieved for the liquid crystal layer. In general, the content (wt%) of the chiral agent may be calculated by an equation of 100/HTP (helical twisting power) × pitch (p) (nm). The HTP indicates the strength of the twist of the chiral agent. Referring to the above method, the content of the chiral agent may be determined considering the desired pitch. In one example, the content of the chiral agent may be in a range of 0.5 to 10 parts by weight relative to 100 parts by weight of the liquid crystal material. Specifically, the content of the chiral agent may be in the range of 1 part by weight to 7 parts by weight, or 1 to 5 parts by weight relative to 100 parts by weight of the liquid crystal material.

The present application also relates to a use of the liquid crystal composition. The present application relates to a liquid crystal cell comprising the liquid crystal composition. The liquid crystal cell may comprise a first substrate, a liquid crystal layer, and a second substrate. The liquid crystal layer may exist between the first substrate and the second substrate. The liquid crystal layer may comprise the liquid crystal composition.

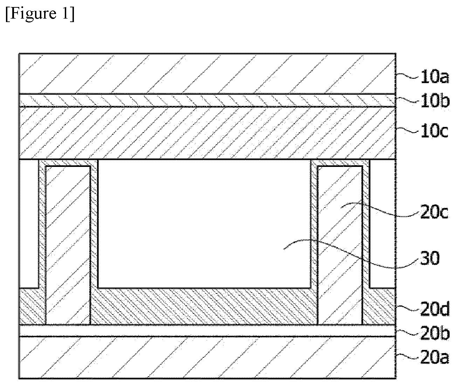

Figure 1 exemplarily shows a liquid crystal cell of the present application. The first substrate may comprise a first base layer (10a) and a pressure-sensitive adhesive layer (10c). The second substrate may comprise a second base layer (20a) and a spacer (20c). There may be a liquid crystal layer (30) filled with the liquid crystal compound in the space between the first substrate and the second substrate.

As the first base layer and the second base layer, for example, an inorganic film such as a glass film, a crystalline or amorphous silicon film or a quartz or ITO (indium tin oxide) film, or a polymer film, and the like may be used, and in terms of implementation of flexible elements, the polymer film may be used.

In one example, each of the first base layer and the second base layer may be a polymer film. As the polymer film, TAC (triacetyl cellulose); COPs (cyclo olefin copolymers) such as norbornene derivatives; PMMA (poly(methyl methacrylate); PC (polycarbonate); PE (polyethylene); PP (polypropylene); PVA (polyvinyl alcohol); DAC (diacetyl cellulose); Pac (polyacrylate); PES (poly ether sulfone); PEEK (polyetheretherketon); PPS (polyphenylsulfone), PEI (polyetherimide); PEN (polyethylenenaphthatlate); PET (polyethyleneterephtalate); PI (polyimide); PSF (polysulfone); PAR (polyarylate) or an amorphous fluororesin, and the like may be used, without being limited thereto. In the first base layer and the second base layer, a coating layer of gold, silver or a silicon compound such as silicon dioxide or silicon monoxide, or a functional layer such as an antireflection layer may also be present as needed.

The first base layer and the second base layer may each have a thickness in a range of about 10 μm to about 1,000 μm. As another example, the first base layer and the second base layer may each have a thickness of about 20 μm or more, 40 μm or more, 60 μm or more, 80 μm or more, 100 μm or more, 120 μm or more, 140 μm or more, 160 μm or more, or about 180 μm or more, and may be about 900 μm or less, 800 μm or less, 700 μm or less, 600 μm or less, 500 μm or less, or about 400 μm or less. When the thicknesses of the first base layer and the second base layer satisfy the above range, it is possible to reduce appearance defects such as wrinkles at the time of manufacturing a transmittance variable device by laminating the liquid crystal cell with outer substrates.

The pressure-sensitive adhesive layer may be present on the inner side surface of the first base layer. In this specification, the "inner side surface" of the constitution included in the liquid crystal cell may mean a surface facing the liquid crystal layer.

The pressure-sensitive adhesive layer may be optically transparent. The pressure-sensitive adhesive layer may have average transmittance of about 80% or more, 85% or more, 90% or more, or 95% or more for the visible light region, for example, a wavelength of 380 nm to 780 nm.

In one example, the pressure-sensitive adhesive layer may be a liquid crystal orientational pressure-sensitive adhesive layer. The pressure-sensitive adhesive layer may be, for example, a vertically orientational pressure-sensitive adhesive layer or a horizontally orientational pressure-sensitive adhesive layer. In this specification, the "vertically orientational pressure-sensitive adhesive" may mean a pressure-sensitive adhesive having attachment force capable of boding the first substrate and the second substrate while imparting vertical orientation force to the adjacent liquid crystal compound. In this specification, the "horizontally orientational pressure-sensitive adhesive" may mean a pressure-sensitive adhesive having attachment force capable of bonding the first substrate and the second substrate while imparting horizontal orientation force to the adjacent liquid crystal compound. The pretilt angle of the adjacent liquid crystal compound with respect to the vertically orientational pressure-sensitive adhesive may be in a range of 80 degrees to 90 degrees, 85 degrees to 90 degrees or about 87 degrees to 90 degrees, or may be about 90 degrees. The pretilt angle of the adjacent liquid crystal compound with respect to the horizontally orientational pressure-sensitive adhesive may be in a range of 0 degrees to 10 degrees, 0 degrees to 5 degrees or 0 degrees to 3 degrees, or may be about 0 degrees.

In this specification, the pretilt angle may mean an angle formed by a director of a liquid crystal compound with respect to a plane horizontal to a liquid crystal orientational pressure-sensitive adhesive or an alignment film in a state where no voltage is applied. In this specification, the director of the liquid crystal compound may mean the optical axis or the slow axis of the liquid crystal layer. Alternatively, the director of the liquid crystal compound may mean an axis parallel to a rod-shaped long axis direction when the liquid crystal compound has a rod shape, and may mean an axis parallel to the normal direction of the disk plane when the liquid crystal compound has a discotic shape.

The thickness of the pressure-sensitive adhesive layer may be, for example, in a range of $3\mu m$ to $15\mu m$. When the thickness of the pressure-sensitive adhesive layer is within the above range, it may be advantageous to minimize defects such as pressing or crowding of the pressure-sensitive adhesive when used in the manufacture of a liquid crystal cell, while securing attachment force between the first substrate and the second substrate.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded. As the pressure-sensitive adhesive, for example, an acrylic, silicone-based, epoxy-based, or urethane-based pressure-sensitive adhesive may be applied.

The pressure-sensitive adhesive layer may comprise a cured product of a pressure-sensitive adhesive resin. In one example, the pressure-sensitive adhesive layer may be a silicone-based pressure-sensitive adhesive layer. The silicone-based pressure-sensitive adhesive layer may comprise a cured product of a curable silicone compound as the pressure-sensitive adhesive resin.

The type of the curable silicone compound is not particularly limited, and for example, a heat-curable silicone compound or an ultraviolet-curing silicone compound may be used. The curable silicone compound may be referred to as the pressure-sensitive adhesive resin.

In one example, the curable silicone compound may be an addition-curing silicone compound.

Specifically, the addition-curing silicone compound may be exemplified by (1) an organopolysiloxane containing two or more alkenyl groups in the molecule and (2) an organopolysiloxane containing two or more silicon-bonded hydrogen atoms in the molecule, but is not limited thereto. Such a silicone compound can form a cured product by an addition reaction, for example, in the presence of a catalyst.

A more specific example of the (1) organopolysiloxane, which can be used in the present application, may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by $R^1_2SiO_{2/2}$ and a siloxane unit represented by $R^1_2R^2SiO_{1/2}$ and a siloxane unit represented by $SiO_{4/2}$, an organopolysiloxane copolymer comprising a siloxane unit represented by $R^1_2R^2SiO_{1/2}$ and a siloxane unit represented by $SiO_{4/2}$, an organopolysiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. Here, $R^1$ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group or a heptenyl group, and the like.

A more specific example of the (2) organopolysiloxane, which can be used in the present application, may include a methylhydrogenpolysiloxane blocking with trimethylsiloxane groups at both ends of the molecular chain, a dimethylsiloxanemethylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by $R^1_3SiO_{1/2}$, a siloxane unit represented by $R^1_2HSiO_{1/2}$ and a siloxane unit represented by $SiO_{4/2}$, an organopolysiloxane copolymer comprising a siloxane unit represented by $R^1_2HSiO_{1/2}$ and a siloxane unit represented by $SiO_{4/2}$, an organopolysiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group or a 3,3,3-trifluoropropyl group, and the like.

When the pressure-sensitive adhesive layer is a vertical orientation pressure-sensitive adhesive layer, the pressure-sensitive adhesive may have a surface energy of 16 mN/m or less. The lower limit of the surface energy may be, for example, 5 mN/m or more. When the pressure-sensitive adhesive layer is a horizontal orientation pressure-sensitive adhesive layer, the surface energy of the pressure-sensitive adhesive layer may be greater than 16 mN/m. The upper limit of the surface energy may be, for example, 50 mN/m or less. The surface energy can be measured using a drop shape analyzer (KRUSS' DSA100 product). Specifically, a process that deionized water with a known surface tension is dropped on the surface of the pressure-sensitive adhesive layer to obtain the contact angle is repeated 5 times, thereby obtaining the average value of the resulting five contact angle values, and equally a process that diiodomethane with a known surface tension is dropped thereon to obtain the contact angle is repeated 5 times, thereby obtaining the average value of the resulting five contact angle values. Then, the surface energy may be obtained by substituting a numerical value (Strom value) for the surface tension of the solvent by the Owens-Wendt-Rabel-Kaelble method using the obtained average values of the contact angles for deionized water and diiodomethane. The surface energy ($\gamma_{surface}$) of the sample can be calculated by considering the dispersion force between nonpolar molecules and the interaction force between polar molecules ($\gamma_{surface} = \gamma_{dispersion} + \gamma_{polar}$), where the ratio of the polar term ($\gamma_{polar}$) in the surface energy $\gamma_{surface}$ can be defined as polarity of the surface.

The first substrate and the second substrates of the liquid crystal cell may be attached by the pressure-sensitive adhesive force of the pressure-sensitive adhesive layer. In one example, the pressure-sensitive adhesive layer of the first substrate and the spacer of the second substrate may be attached. In one example, when the alignment film is formed on the spacer of the second substrate, the region of the alignment film corresponding to the spacer may be attached to the pressure-sensitive adhesive layer of the first substrate.

The pressure-sensitive adhesive layer may have a storage elastic modulus of 1 MPa or less. The lower limit of the storage elastic modulus of the pressure-sensitive adhesive layer may be, for example, 0.01 MPa or more. Specifically, the storage elastic modulus of the pressure-sensitive adhesive layer may be 0.02 MPa or more, 0.04 MPa, 0.06 MPa, 0.08 MPa, or 0.1 MPa or more, and may be 0.8 MPa or less, 0.6 MPa or less, 0.4 MPa or less, or 0.2 MPa or less. The storage elastic modulus may be a value measured at a temperature of 25°C and a frequency of 6 rad/sec.

The spacer (20c) may maintain the gap between the first substrate and the second substrate. The liquid crystal layer may be present in a region where the spacer does not exist between the first substrate and the second substrate.

The spacer may be a patterned spacer. The spacer may have a partition wall shape. When the spacer has a partition wall shape, it may be more advantageous in terms of improving sharpness of the see-through image. The partition wall may partition the space between the first substrate and the second substrate into two or more spaces. In the region where the spacer does not exist, other films or other layers present in the lower part may be exposed. For example, the second electrode layer may be exposed in a region where the spacer does not exist. The alignment film may cover the spacer and the second electrode layer exposed in the region where the spacer is not present. In the liquid crystal cell in which the first substrate and the second substrate are bonded together, the alignment film present on the spacer of the second substrate and the pressure-sensitive adhesive layer of the upper substrate may be in contact with each other.

The liquid crystal material and the above-described additives, for example, the dichroic dye, the chiral agent, and the like may be present in the region between the first substrate and the second substrate where the spacer does not exist. The shape of the cross section of the space between the partition walls of the spacer is not particularly limited, which can be applied without limitation to have, for example, a circle, an ellipse, or other polygonalshaped polyhedrons.

The spacer may comprise a curable resin. The type of the curable resin is not particularly limited, where for example, a thermosetting resin or a photo-curable resin, for example, an ultraviolet curable resin may be used. As the thermosetting resin, for example, a silicone resin, a silicon resin, a fran resin, a polyurethane resin, an epoxy resin, an amino resin, a phenol resin, a urea resin, a polyester resin or a melamine resin, and the like may be used, without being limited thereto. As the ultraviolet curable resin, typically an acrylic polymer, for example, a polyester acrylate polymer, a polystyrene acrylate polymer, an epoxy acrylate polymer, a polyurethane acrylate polymer or a polybutadiene acrylate polymer, a silicone acrylate polymer or an alkyl acrylate polymer, and the like may be used, without being limited thereto.

The spacer may be formed by a patterning process. For example, the spacer may be formed by a photolithography process. The photolithography process may comprise a process of applying a curable resin composition on a base layer or an electrode layer and then irradiating it with ultraviolet rays via a pattern mask. The pattern mask may be patterned into an ultraviolet transmitting region and an ultraviolet blocking region. The photolithography process may further comprise a process of washing the curable resin composition irradiated with ultraviolet rays. The region irradiated with ultraviolet rays is cured, and the region irradiated with no ultraviolet rays remains in a liquid phase, so that it is removed through the washing process, whereby it can be patterned into a partition wall shape. In the photolithography process, a release treatment may be performed on the pattern mask to easily separate the resin composition and the pattern mask after ultraviolet irradiation, or a release paper may also be placed between the layer of the resin composition and the pattern mask.

The width (line width), spacing (pitch), thickness and area of the spacer may be appropriately selected within a range without impairing the purpose of the present application. For example, the width (line width) of the spacer may be in a range of 10μm to 500μm or in a range of 10μm to 50μm. The spacing (pitch) of the spacer may be in a range of 10μm to 1000μm or in a range of 100μm to 1000μm. The area of the spacer may be about 5% or more and may be 50% or less, relative to 100% of the total area of the second base layer. When the area of the spacer is within the above range, it may be advantageous to ensure excellent electro-optical properties while adequately securing attachment force between the upper substrate and the lower substrate. The thickness of the spacer may range, for example, from 1μm to 30μm or from 3μm to 20μm.

The first substrate may further comprise a first electrode layer (10b) between the first base layer (10a) and the pressure-sensitive adhesive layer (10c). The second substrate may further comprise a second electrode layer (20b) between the second base layer (20a) and the spacer (20c). The first electrode layer and the second electrode layer may serve to provide application of an external action, for example, an electric field, so that the material included in the liquid crystal layer transmits or blocks incident light. In one example, the first electrode layer and/or the second electrode layer may comprise a conductive polymer, a conductive metal, a conductive nanowire, or a metal oxide such as ITO (indium tin oxide), and the like, but is not limited thereto. The first electrode layer and the second electrode layer may each be formed by, for example, depositing the conductive polymer, the conductive metal, the conductive nanowire, or the metal oxide such as ITO (indium tin oxide).

The second substrate may further comprise an alignment film (20d). The spacer (20c) may exist between the second base layer (20a) and the alignment film (20d). When the second substrate comprises the second electrode layer (20b), the spacer (20c) may be present between the second electrode layer (20b) and the alignment film (20d). The alignment film may be formed on the spacer. That is, the top surface part and/or the side surface part of the spacer may contact the alignment film. The lower surface part of the spacer may contact the second electrode layer. Since the pressure-sensitive adhesive layer included in the first substrate may have liquid crystal orientation, it may not comprise an alignment film. That is, the alignment film may not be formed on the inner side surface of the first electrode layer.

The alignment film and the liquid crystal layer may be in contact with each other. The alignment film may be a vertical alignment film or a horizontal alignment film. In this specification, the "horizontal alignment film" may mean a layer comprising an orientational material that imparts horizontal orientation force to a liquid crystal compound present in an adjacent liquid crystal layer. In this specification, the "vertical alignment film" may mean a layer comprising an orientational material that imparts vertical orientation force to a liquid crystal compound present in an adjacent liquid crystal layer. The adjacent liquid crystal compound may have a pretilt angle with respect to the vertical alignment film in the range of 80 degrees to 90 degrees, 85 degrees to 90 degrees, or about 87 degrees to 90 degrees, or about 90 degrees, and the adjacent liquid crystal compound may have a pretilt angle with respect to the horizontal alignment film in the range of 0 degrees to 10 degrees, 0 degrees to 5 degrees or 0 degrees to 3 degrees, or about 0 degrees. Unlike the pressure-sensitive adhesive layer, the alignment film may not have adhesive force for bonding the upper substrate and the lower substrate. In one example, the alignment film may have peel force close to zero regarding the first base layer in the state of the liquid crystal cell of Figure 1.

The alignment film may be a rubbing alignment film or a photo-alignment film. The orientation direction of the alignment film may be a rubbing direction in the case of a rubbing alignment film and a direction of polarized light to be irradiated in the case of a photo-alignment film, where such an orientation direction can be confirmed by a detection method using an absorption-type linear polarizer. Specifically, the orientation direction can be confirmed by disposing an absorption-type linear polarizer on one side of the liquid crystal layer in a state where the liquid crystal compound included in the liquid crystal layer is horizontally oriented, and measuring transmittance while rotating the polarizer at 360 degrees. When the side of the liquid crystal layer or the absorption-type linear polarizer is irradiated with light in the above state and simultaneously the luminance (transmittance) is measured from the other side, the transmittance tends to be low, if the absorption axis or transmission axis coincides with the orientation direction of the liquid crystal alignment film, where the orientation direction can be confirmed through simulation reflecting the refractive index anisotropy of the applied liquid crystal compound or the like. A method of confirming the orientation direction according to the mode of the liquid crystal layer is known, and in the present application, the orientation direction of the alignment film can be confirmed by such a known method.

The alignment film may comprise one or more selected from the group consisting of a material known to exhibit orientation ability by rubbing orientation such as a polyimide compound, a poly(vinyl alcohol) compound, a poly(amic acid) compound, a polystyrene compound, a polyamide compound and a polyoxyethylene compound, or a material known to exhibit orientation ability by light irradiation such as a polyimide compound, a polyamic acid compound, a polynorbornene compound, a phenylmaleimide copolymer compound, a polyvinylcinnamate compound, a polyazobenzene compound, a polyethyleneimide compound, a polyvinylalcohol compound, a polyamide compound, a polyethylene compound, a polystyrene compound, a polyphenylenephthalamide compound, a polyester compound, a CMPI (chloromethylated polyimide) compound, a PVCI (polyvinylcinnamate) compound and a polymethyl methacrylate compound, but is not limited thereto.

In this specification, the combination of the first base layer, the first electrode layer and the pressure-sensitive adhesive layer may be referred to as the first substrate, and the combination of the second base layer, the second electrode layer, the spacer and the alignment film may be referred to as the second substrate. In the liquid crystal cell, the first substrate may not comprise a separate alignment film other than the pressure-sensitive adhesive layer, and the lower substrate may comprise the alignment film.

The liquid crystal material in the liquid crystal layer may switch its orientation state by application of an external action. In this specification, the term "external action" may mean all external factors that may affect the behavior of materials included in the liquid crystal layer, for example, an external voltage, or the like. Therefore, the state without any external action may mean a state without application of an external voltage, or the like.

The liquid crystal layer comprising the liquid crystal material and the dichroic dye may be a GHLC layer (guest host liquid crystal layer). In this specification, the "GHLC layer (guest host liquid crystal layer)" may mean a functional layer that dichroic dyes are arranged together depending on arrangement of the liquid crystal compound to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

The thickness of the liquid crystal layer is not particularly limited, and for example, the thickness of the liquid crystal layer may be about 0.01μm or more, 0.05μm or more, 0.1μm or more, 0.5μm or more, 1μm or more, 1.5μm or more, 2μm or more, 2.5μm or more, 3μm or more, 3.5μm or more, 4μm or more, 4.5μm or more, 5μm or more, 5.5μm or more, 6μm or more, 6.5μm or more, 7μm or more, 7.5μm or more, 8μm or more, 8.5μm or more, 9μm or more, or 9.5μm or more. The upper limit of the thickness of the liquid crystal layer is not particularly limited, which may generally be about 30μm or less, 25μm or less, 20μm or less, or 15μm or less.

The orientation state of the liquid crystal layer may be switched depending on the voltage applied to the liquid crystal cell. In one example, when no voltage is applied to the liquid crystal cell, the liquid crystal layer may have a first orientation state, and when a voltage is applied to the liquid crystal cell, the liquid crystal layer may have a second orientation state different from the first orientation state. The first orientation state and the second orientation state may each be exemplified by a horizontal orientation state, a vertical orientation state, a twist orientation state, a tilt orientation state, a hybrid orientation state, and the like.

In this specification, the "horizontal orientation state" is a state in which the directors of the liquid crystal material in the liquid crystal layer are arranged approximately parallel to the plane of the liquid crystal layer, where for example, the angle formed by the director with respect to the plane of the liquid crystal layer may be, for example, in a range of about -10 degrees to 10 degrees, or -5 degrees to 5 degrees, or may be approximately about 0 degrees.

In this specification, the "vertical orientation state" is a state in which the directors of the liquid crystal material in the liquid crystal layer are arranged approximately perpendicular to the plane of the liquid crystal layer, where for example, the angle formed by the director with respect to the plane of the liquid crystal layer may be, for example, in a range of about 80 degrees to 100 degrees, or 85 degrees to 95 degrees, or may be approximately about 90 degrees.

In this specification, the "twist orientation state" may mean a helical structure in which the directors of the liquid crystal material in the liquid crystal layer form layer and are oriented while twisting along a virtual helical axis. The twist orientation state can be implemented in a vertical, horizontal, or tilt orientation state, where that is, a vertical twist orientation mode is a state in which individual liquid crystal compounds form layers while twisting along the helical axis in a vertically oriented state; a horizontal twist orientation mode is a state in which individual liquid crystal compounds form layers while twisting along the helical axis in a horizontally oriented state; and a tilt twist orientation mode is a state in which individual liquid crystal compounds form layers while twisting along a helical axis in an obliquely oriented state.

In this specification, the "hybrid orientation state" may mean an orientation state in which the tilt angle, which is the angle formed by the director of the liquid crystal material in the liquid crystal layer with respect to the plane of the liquid crystal layer, gradually increases or decreases along the thickness direction of the liquid crystal layer.

In one example, the first orientation state may be a twist orientation state. That is, the liquid crystal layer may switch between twist orientation and an orientation state different from the twist orientation through the application of external energy.

In one example, the liquid crystal layer may switch between twist orientation and vertical orientation states. In one example, the liquid crystal layer may be in the twist orientation state in a state where no voltage is applied, and may be in the vertical orientation state in a state where a voltage is applied.

In the twist orientation state, a ratio (d/p) of a thickness (d) to a pitch (p) of the liquid crystal layer may be 1 or more. The upper limit of the ratio (d/p) may be, for example, 8 or less. The ratio (d/p) may specifically be 2 or more, or 3 or more, and may be 7 or less, 6 or less, 5 or less, or 4 or less. When the ratio (d/p) of the thickness (d) to the pitch (p) of the liquid crystal layer is within the above range, the transmittance device can exhibit excellent see-through performance even in a dark state while exhibiting excellent light transmittance variable characteristics, and can be advantageous in terms of exhibiting excellent durability and low driving voltages. Typically, when the ratio d/p is 0.5 or more and 1.0 or less, it can be called an STN (super twisted nematic) mode, and when the ratio d/p exceeds 1.0, it can be called an HTN (highly twisted nematic) driving mode.

The pitch (p) of the liquid crystal layer can be measured by a measurement method using a wedge cell, and specifically, can be measured by a method described in D. Podolskyy et al. Simple method for accurate measurements of the cholesteric pitch using a "stripe-wedge Grandjean-Cano cell (Liquid Crystals, Vol. 35, No. 7, July 2008, 789-791). The ratio (d/p) can be achieved by introducing an appropriate amount of a chiral agent into the liquid crystal layer.

A driving mode of the liquid crystal cell may be appropriately selected according to need. The driving mode of the liquid crystal cell includes, for example, an ECB (Electrically controlled birefringence) mode, a TN (Twisted Nematic) mode, an STN (Super Twisted Nematic) mode, an RTN (Reverse Twisted Nematic) mode, an RSTN (Reverse Super Twisted Nematic) mode, an HAN (Hybrid Aligned Nematic) mode, a twisted HAN (Twisted Hybrid Aligned Nematic) mode, a super twisted HAN (Super Twisted Hybrid Aligned Nematic) mode, an IPS (In-Plane Switching) mode, a VA (vertical alignment) mode, and the like. Depending on the driving mode of the desired liquid crystal cell, the type of liquid crystal, type of alignment film, type of additive, and the like may be appropriately selected.

The liquid crystal cell can exhibit excellent sharpness even in a dark state. The liquid crystal cell can implement the dark state when no voltage is applied. In one example, the liquid crystal cell may satisfy Equation 2 below.

[Equation 2]

$$A/B \times 100\% \geq 80\%$$

In Equation 2, A is an MTF (Modulation Transfer Function) 50 value measured for the liquid crystal cell in a state where no voltage is applied, and B is an MTF (Modulation Transfer Function) 50 value measured in air.

The A/B ratio in Equation 2 above may be an indicator of the sharpness of the liquid crystal cell compared to air. The A/B × 100% value may be, for example, 82% or more, 84% or more, 86% or more, 88% or more, 90% or more, 92% or more, 94% or more, or 96% or more. The higher the value of the A/B ratio (%) in Equation 2, it means to have more excellent sharpness, so that the upper limit thereof is not particularly limited, but may be, for example, 99% or less, or 97% or less. The MTF50 value (A) of the liquid crystal cell may be 45 Cy/mm or more, 46 Cy/mm or more, 47 Cy/mm or more, 48 Cy/mm or more, 49 Cy/mm or more, 50 Cy/mm or more, 51 Cy/mm or more, 52 Cy/mm or more, and may be less than 54.87 Cy/mm, 54 Cy/mm or less, or 53 Cy/mm. or less. The MTF 50 value in air may be 54.87 Cy/mm.

The present application relates to a use of the liquid crystal composition and/or the liquid crystal cell. The liquid crystal composition and/or the liquid crystal cell can be used, for example, as a transmittance variable device. That is, the present application relates to a transmittance variable device comprising the liquid crystal cell. The transmittance variable device can vary the transmittance through switching the orientation state of the liquid crystal material and the dichroic dye.

In this specification, the transmittance variable device may mean a device capable of switching between at least two different light states. Here, the different light states may mean states where at least transmittance varies. An example of states capable of being implemented by the transmittance variable device may be exemplified by a transparent mode state and a blocking mode state. In one example, the transmittance variable device of the present application may be a device capable of switching between at least the transparent mode state and the blocking mode state. The transparent state may be a bright state, and the blocking state may be a dark state.

The transmittance of the transmittance variable device in the transparent mode state may be at least 20% or more, 25% or more, 30% or more, 35% or more, 40% or more, 45% or more, 50% or more, 55% or more, 60% or more, 65% or more, 70% or more, 75% or more, or 80% or more or so. Also, the transmittance of the transmittance variable device in the blocking mode state may be 60% or less, 55% or less, 50% or less, 45% or less, 40% or less, 35% or less, 30% or less, 25% or less, 20% or less, 15% or less, 10% or less, or 5% or less. In the transparent mode, the higher the transmittance, the more advantageous it is, and in the blocking mode, the lower the transmittance, the more advantageous it is, so that the upper limit of the transmittance in the transparent mode state and the lower limit of the transmittance in the blocking mode state are not particularly limited, and in one example, the upper limit of the transmittance in the transparent mode state may be less than about 100%, and the lower limit of the transmittance in the blocking mode state may be more than about 0%.

In one example, in a transmittance variable device capable of switching between the transparent mode state and the blocking mode state, the difference between the transmittance in the transparent mode state and the transmittance in the blocking mode state (transmittance in transparent mode - transmittance in blocking mode) may be 15% or more, 20% or more, 25% or more, 30% or more, 35% or more, or 40% or more, or may be 90% or less, 85% or less, 80% or less, 75% or less, 70% or less, 65% or less, 60% or less, 55% or less, 50% or less, or 45% or less.

The transmittance may be, for example, straight light transmittance. The straight light transmittance is the percentage of the ratio of light transmitted in the same direction as the incident direction to the light incident on the device. For example, if the device is in the form of a film or sheet, the percentage of light that has transmitted through the device in a direction parallel to the normal direction among the light incident in a direction parallel to the normal direction of the surface of the film or sheet may be defined as the transmittance.

The transmittance may be the transmittance for any wavelength within the range of the visible light region, for example, about 400 to 700 nm or about 380 to 780 nm, may be the transmittance for the entire visible light region, or may be the maximum or minimum transmittance of the transmittance for the entire visible light region, or may be the average value of the transmittance within the visible light region. Also, in another example, the transmittance may be the transmittance for light with a wavelength of about 550 nm.

The transmittance variable device may comprise an outer substrate. In one example, the transmittance variable device may comprise a first outer substrate, the liquid crystal cell, and a second outer substrate sequentially. It may be advantageous to overcome physical limits of the liquid crystal cell through the outer substrate.

The first outer substrate and the second outer substrate may each independently be an inorganic substrate or a plastic substrate. The inorganic substrate is not particularly limited, and a well-known inorganic substrate may be used. In one example, a glass substrate having excellent light transmittance may be used as the inorganic substrate. As an example of the glass substrate, a soda lime glass substrate, a general tempered glass substrate, a borosilicate glass substrate or an alkali-free glass substrate, and the like may be used, without being limited thereto. As the polymer substrate, a cellulose film such as TAC (triacetyl cellulose) or DAC (diacetyl cellulose); a COP (cyclo olefin copolymer) film such as norbornene derivatives; an acrylic film such as PAC (polyacrylate) or PMMA (poly(methyl methacrylate); a PC (polycarbonate) film; a polyolefin film such as PE (polyethylene) or PP (polypropylene); a PVA (polyvinyl alcohol) film; a PI (polyimide) film; a sulfone-based film such as a PSF (polysulfone) film, a PPS (polyphenylsulfone) film or a PES (polyethersulfone) film; a PEEK (polyetheretherketon) film; a PEI (polyetherimide) film; a polyester-based film such as a PEN (polyethylenenaphthatlate) film or a PET (polyethyleneterephtalate) film; or a fluororesin film, and the like may be used, without being limited thereto. In each of the first outer substrate and the second outer substrate, a coating layer of: gold; silver; or a silicon compound such as silicon dioxide or silicon monoxide, or a functional layer such as an antireflection layer may also be present as needed. In one example, at least one of the first outer substrate and the second outer substrate may be a glass substrate, and may be the other outer substrate, or a plastic substrate. In one example, the first outer substrate and the second outer substrate may each be a glass substrate.

The area of the first outer substrate and/or the second outer substrate may be larger than the area of the first base layer and/or the second base layer. The first outer substrate and the second outer substrate may be a flat substrate or may be a substrate having a curved surface shape. For example, the first outer substrate and the second outer substrate may be simultaneously flat substrates, simultaneously have a curved surface shape, or any one may be a flat substrate and the other may be a substrate having a curved surface shape. In addition, here, in the case of having the curved surface shape at the same time, the respective curvatures or curvature radii may be the same or different. In this specification, the curvature or curvature radius may be measured in a manner known in the industry, and for example, may be measured using a contactless apparatus such as a 2D profile laser sensor, a chromatic confocal line sensor or a 3D measuring confocal microscopy. The method of measuring the curvature or curvature radius using such an apparatus is known.

The first outer substrate and the second outer substrate may each have a thickness of about 0.3 mm or more. In another example, the thickness may be about 0.5 mm or more, 1 mm or more, 1.5 mm or more, or about 2 mm or more, and may also be about 10 mm or less, 9 mm or less, 8 mm or less, 7 mm or less, 6 mm or less, 5 mm or less, 4 mm or less, or about 3 mm or less.

The first outer substrate and the second outer substrate may each be bonded to the liquid crystal cell by an adhesive layer. The adhesive layer may be a thermoplastic polyurethane (TPU) adhesive layer, a polyamide adhesive layer, a polyester adhesive layer, an EVA (Ethylene Vinyl Acetate) adhesive layer, an acrylic adhesive layer, a silicone adhesive layer, or a polyolefin adhesive layer.

An autoclave process may be performed to bond the first outer substrate and the second outer substrate to the liquid crystal cell. The autoclave process may be performed by heating and/or pressurizing a laminate in which the first outer substrate and the second outer substrate are laminated on the liquid crystal cell using an adhesive layer. When the transmittance variable device further comprises other optical members, the laminate may further comprise the optical members. The conditions of the autoclave process are not particularly limited, and for example, it can be performed under appropriate temperatures and pressures depending on the type of the applied adhesive layer. The temperature of a typical autoclave process is about 80°C or more, 90°C or more, or 100°C or more, and the pressure is 2 atmospheres or more, without being limited thereto. The upper limit of the process temperature may be about 200°C or less, 190°C or less, 180°C or less, or 170°C or less or so, and the upper limit of the process pressure may be about 10 atmospheres or less, 9 atmospheres or less, 8 atmospheres or less, 7 atmospheres or less, or 6 atmospheres or less or so.

The liquid crystal cell and/or the transmittance variable device can be applied to devices that require transmittance variable characteristics. In one example, the transmittance variable device itself may be a sunroof for a vehicle. For example, the present application relates to an automobile comprising: an auto body in which one or more openings are formed; and the liquid crystal cell or the transmittance variable device mounted in the openings. Alternatively, the liquid crystal cell and/or the transmittance variable device may be applied to a lens part of sunglasses or eyewear, or may also be applied to smart windows of a building, and the like. The eyewear may be exemplified by eyewear for AR (Augmented Reality) or VR (Virtual Reality), and the like.

[Effects of Invention]

The liquid crystal composition of the present application can provide a liquid crystal cell and a transmittance variable device having excellent durability as well as excellent see-through performance in a dark state.

[Brief Description of Drawings]

Figure 1 exemplarily shows a liquid crystal cell of the present application.
Figure 2 is images observing sharpness.
Figure 3 is images observing occurrence of rainbow bands.

[Mode for Invention]

Hereinafter, the present application will be described in detail through examples according to the present application, but the scope of the present application is not limited to the examples presented below.

**Measurement Example 1. Measurement of MTF (Modulation Transfer Function) 50**

For a liquid crystal cell in a state (dark state) where no voltage was applied, an MTF 50 value was measured as an indicator of sharpness. The MTF expresses a sensitivity compared to luminance for a subject with a striped pattern that luminance changes in a sinusoidal form as a function of spatial frequencies. The MTF 50 is, as an indicator of image sharpness, the spatial frequency at which luminance drops to 50% of the low frequency value, which means the higher the MTF50 value, the better the sharpness of the liquid crystal cell. The MTF 50 value was measured using an SRF plus chart and Imatest software according to Imatest's manual. Specifically, the MTF 50 value can be obtained by placing the SRF plus chart under an LED light and quantifying how clearly the image of the chart passing through the liquid crystal cell appears. The sharpness of the liquid crystal cell compared to air has been measured as A/B x 100%, where A is the MTF 50 value of the liquid crystal cell, and B is the MTF 50 value in air. The MTF 50 value in air was the MTF 50 value in air without any objects including liquid crystal cells, which was 54.87 Cy/mm.

**Measurement Example 2. Measurement of total transmittance (T.T)**

The total transmittance was measured for the liquid crystal cell in a state (dark state) where no voltage was applied. The total transmittance was measured according to ASTM D1003 standard using a haze meter (NDH5000SP, Secos).

Specifically, when light with a wavelength of 380nm to 780nm is incident on the measurement object in the integrating sphere, the incident light is divided into diffused light (DT, sum of the entire diffused and emitted light) and straight light (PT, light emitted from the front direction excluding diffused light) by the measurement object. The diffused light and the straight light can each be measured by condensing them on the light receiving element in the integrating sphere. By the above process, the total transmitted light (TT) can be defined as the sum (DT+PT) of the diffused light (DT) and the straight light (PT). The total transmitted light means total transmittance. The total transmittance is an average value for light with a wavelength of 380 nm to 780 nm.

**Evaluation Example 1. Visibility evaluation of object**

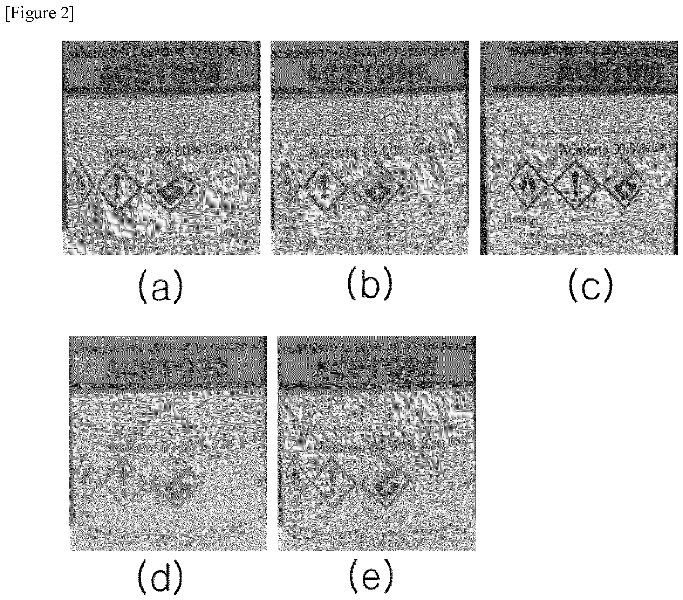

As a liquid crystal cell was placed between an object (acetone bottle) and a camera, and an image was photographed with the camera, the sharpness of the image was evaluated with the naked eye. The distance between the object and the liquid crystal cell was 15 cm. Figure 2 shows the photographed images (a: Example 1, b: Example 2, c: Example 3, d: Comparative Example 1, e: Comparative Example 2).

**Evaluation Example 2. Evaluation of whether rainbow bands occur**

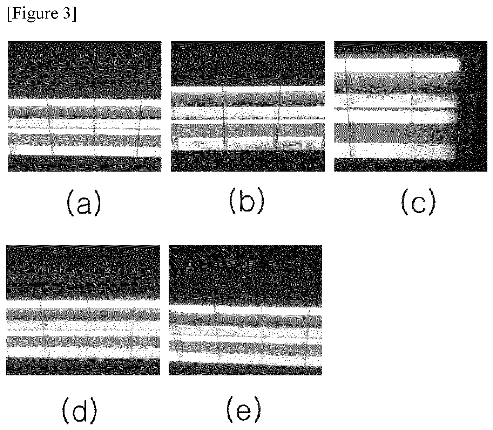

As a liquid crystal cell was disposed under a fluorescent lamp, a camera was disposed under the liquid crystal cell, and then it was photographed through the camera what the light from the fluorescent lamp looked like upon passing through the liquid crystal cell, the occurrence of rainbow bands was observed. Figure 3 shows the photographed images (a: Example 1, b: Example 2, c: Example 3, d: Comparative Example 1, e: Comparative Example 2).

**Example 1**

A liquid crystal composition was prepared by mixing 100 parts by weight of a liquid crystal material (ZKC-5115xx, JNC) with a refractive index anisotropy ($\Delta$n) of 0.076, a clearing point (Tni) of 91.5 °C, and a Tni/($\Delta$n)^2 value of about 15841.4 with 3 parts by weight of a dichroic dye (NKX-4010, Hayashibara) and 3.5 parts by weight of a chiral agent (S811, Merck).

A pressure-sensitive adhesive composition was prepared by mixing an OCA type pressure-sensitive adhesive resin (KR3700, ShinEtsu) with a toluene solvent to have a solid content concentration of 25 wt%. The pressure-sensitive adhesive composition was coated on a fluorine release film (FSC6, Nippa) by bar coating, and then heated at 140°C for 5 minutes to form a pressure-sensitive adhesive layer with a final thickness of about 10$\mu$m. The pressure-sensitive adhesive layer was laminated on an ITO layer of a PET-ITO film to produce a first substrate. The PET-ITO film is a film in which an ITO (Indium Tin Oxide) layer is deposited to a thickness of about 30 nm on a highly stretched PET (polyethyleneterephtalate) film (OCF, SKC), where the total thickness is about 145$\mu$m. The produced first substrate has a structure in which a highly stretched PET film/ITO layer/pressure-sensitive adhesive layer/release film are laminated in this order.

An acrylic resin composition (Product name: KAD-03, Manufacturer: Minutatec) was coated on the ITO layer of the same PET-ITO film as used in the first substrate, and then patterned into a square shape using a photolithography method to form a partition wall-shaped spacer. The height of the partition wall shape is 8$\mu$m, the pitch (interval between two opposing sides of a square) is 350$\mu$m, and the line width is 15$\mu$m. Subsequently, a horizontal alignment film (SE-7492, Nissan) was coated to a thickness of about 300 nm on the spacer, and then rubbed with a rubbing cloth to produce a second substrate.

The liquid crystal composition was coated on the alignment film of the second substrate. After peeling the fluorine release film from the first substrate, the first substrate was bonded to the second substrate to manufacture a liquid crystal cell. The liquid crystal cell is a highly twisted nematic liquid crystal cell with a cell gap (d) of 8$\mu$m and d/p of 3.

The MTF 50 value of the liquid crystal cell in Example 1 was 52.84 Cy/mm, the sharpness (compared to air) was 96.29%, and the total transmittance (%) was 11.0%. In addition, as shown in Figure 2, Example 1 has a very clear see-through image, and as shown in Figure 3, it can be confirmed that rainbow bands do not occur even under the fluorescent lamp.

**Example 2**

A liquid crystal cell was manufactured in the same manner as in Example 1, except for changing the liquid crystal material to a liquid crystal material (HAE625484, HCCH) with a refractive index anisotropy ($\Delta$n) of 0.067, a clearing point (Tni) of 86°C, and a Tni/($\Delta$n)^2 value of about 19603.5. The MTF 50 value of the liquid crystal cell in Example 2 was 51.36 Cy/mm, the sharpness (compared to air) was 93.59%, and the total transmittance (%) was 11.3%. In addition, as shown in Figure 2, Example 2 has a very clear see-through image, and as shown in Figure 3, it can be confirmed that rainbow bands do not occur even under the fluorescent lamp.

**Example 3**

A liquid crystal cell was manufactured in the same manner as in Example 1, except for changing the liquid crystal material to a liquid crystal material (CSM9056, HCCH) with a refractive index anisotropy ($\Delta n$) of 0.078, a clearing point (Tni) of 110°C, and a Tni/($\Delta n$)^2 value of about 18080.2. The MTF 50 value of the liquid crystal cell in Example 3 was 52.81 Cy/mm, the sharpness (compared to air) was 96.24%, and the total transmittance (%) was 11.5%. In addition, as shown in Figure 2, Example 3 has a very clear see-through image, and as shown in Figure 3, it can be confirmed that rainbow bands do not occur even under the fluorescent lamp.

**Comparative Example 1**

A liquid crystal cell was manufactured in the same manner as in Example 1, except for changing the liquid crystal material to a liquid crystal material (MDA-12-1121, Merck) with a refractive index anisotropy ($\Delta n$) of 0.1349, a clearing point (Tni) of 114.5°C, and a Tni/($\Delta n$)^2 value of about 6291.9. The MTF 50 value of the liquid crystal cell in Comparative Example 1 was 14.37 Cy/mm, the sharpness (compared to air) was 26.18%, and the total transmittance (%) was 14.7%. In addition, as shown in Figure 2, Comparative Example 1 has an unclear see-through image, and as shown in Figure 3, it can be confirmed that rainbow bands also occur under the fluorescent lamp.

**Comparative Example 2**

A liquid crystal cell was manufactured in the same manner as in Example 1, except for changing the liquid crystal material to a liquid crystal material (SLC127118, Slichem) with a refractive index anisotropy ($\Delta n$) of 0.093, a clearing point (Tni) of 123°C, and a Tni/($\Delta n$)^2 value of about 14221.3. The MTF 50 value of the liquid crystal cell in Comparative Example 2 was 43.05 Cy/mm, the sharpness (compared to air) was 78.45%, and the total transmittance (%) was 12.5%. In addition, as shown in Figure 3, in Comparative Example 2, no rainbow bands occurred under the fluorescent lamp, but as shown in Figure 2, the see-through image was not clear.

[Explanation of Reference Numerals]

10a: first base layer, 10b: first electrode, 10c: pressure-sensitive adhesive layer, 20a: second base layer, 20b: second electrode, 20c: spacer, 20d: alignment film, 30: liquid crystal layer

**Claims**

1. A liquid crystal composition comprising a liquid crystal material satisfying Equation 1 and a dichroic dye:

[Equation 1]

$$\text{Tni} / (\Delta n)^2 \geq 12345.7$$

wherein, Tni is a clearing point of the liquid crystal material, and $\Delta n$ is refractive index anisotropy of the liquid crystal material.

2. The liquid crystal composition according to claim 1, further comprising a chiral agent.

3. The liquid crystal composition according to claim 1, wherein the liquid crystal material has a clearing point of 85°C or more.

4. The liquid crystal composition according to claim 1, wherein the liquid crystal material has refractive index anisotropy of 0.089 or less.

5. A liquid crystal cell comprising a first substrate, a liquid crystal layer, and a second substrate, wherein the liquid crystal layer comprises the liquid crystal composition of claim 1.

6. The liquid crystal cell according to claim 5, wherein the liquid crystal layer exists in a twist orientation state in a state where no voltage is applied.

7. The liquid crystal cell according to claim 6, wherein a ratio (d/p) of a thickness (d) to a pitch (p) of the liquid crystal layer in the twist orientation state is 1 or more.

8. The liquid crystal cell according to claim 5, wherein the first substrate comprises a first base layer and a pressure-sensitive adhesive layer, and the second substrate comprises a second base layer and a spacer.

9. The liquid crystal cell according to claim 8, wherein the first substrate further comprises a first electrode layer between the first base layer and the pressure-sensitive adhesive layer, and the second substrate further comprises a second electrode layer between the second base layer and the spacer.

10. The liquid crystal cell according to claim 5, wherein the first substrate comprises no alignment film, and the second substrate further comprises an alignment film.

11. The liquid crystal cell according to claim 5, wherein the liquid crystal cell satisfies Equation 2:

[Equation 2]

$$A/B \times 100\% \geq 80\%$$

wherein, A is an MTF (Modulation Transfer Function) 50 value measured for the liquid crystal cell in a state where no voltage is applied, and B is an MTF (Modulation Transfer Function) 50 value measured in air.

12. An automobile comprising: an auto body in which one or more openings are formed; and the liquid crystal cell of claim 5 mounted in the openings.

[Figure 1]

[Figure 2]

(a)　　　　　(b)　　　　　(c)

(d)　　　　　(e)

[Figure 3]

(a)　　　　　(b)　　　　　(c)

(d)　　　　　(e)

## INTERNATIONAL SEARCH REPORT

| International application No. |
|---|
| **PCT/KR2024/002536** |

### A. CLASSIFICATION OF SUBJECT MATTER

**C09K 19/60**(2006.01)i; **C09K 19/58**(2006.01)i; **C09K 19/02**(2006.01)i; **G02F 1/1337**(2006.01)i; **G02F 1/1347**(2006.01)i; **G02F 1/1339**(2006.01)i; **B60J 3/04**(2006.01)i

According to International Patent Classification (IPC) or to both national classification and IPC

### B. FIELDS SEARCHED

Minimum documentation searched (classification system followed by classification symbols)

C09K 19/60(2006.01); C09B 1/50(2006.01); C09B 31/18(2006.01); C09K 19/02(2006.01); C09K 19/44(2006.01); G02F 1/1339(2006.01); G02F 1/137(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 액정 조성물(liquid crystal composition), 이색성 염료(dichroic dye), 등명점 (clearing point), 굴절률 이방성(refractive index anisotropy)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0003981 A (LG CHEM, LTD.) 11 January 2022 (2022-01-11)<br>See claims 6-10; paragraphs [0039]-[0063] and [0084]-[0085]; and figure 1. | 1-12 |
| Y | KR 10-2125892 B1 (MERCK PATENT GMBH) 08 July 2020 (2020-07-08)<br>See claim 1; and paragraphs [0134]-[0136]. | 1-12 |
| A | KR 10-2231178 B1 (MERCK PATENT GMBH) 24 March 2021 (2021-03-24)<br>See entire document. | 1-12 |
| A | KR 10-2011-0063271 A (DONGJIN SEMICHEM CO., LTD.) 10 June 2011 (2011-06-10)<br>See entire document. | 1-12 |
| A | KR 10-2234246 B1 (MERCK PATENT GMBH) 01 April 2021 (2021-04-01)<br>See entire document. | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 June 2024** | **10 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002536**

| Patent document cited in search report | | | Publication date (day/month/year) | Patent family member(s) | | | Publication date (day/month/year) |
|---|---|---|---|---|---|---|---|
| KR | 10-2022-0003981 | A | 11 January 2022 | CN | 115768849 | A | 07 March 2023 |
| | | | | EP | 4177322 | A1 | 10 May 2023 |
| | | | | EP | 4177322 | A4 | 27 December 2023 |
| | | | | JP | 2023-529139 | A | 07 July 2023 |
| | | | | JP | 7480938 | B2 | 10 May 2024 |
| | | | | KR | 10-2513848 | B1 | 27 March 2023 |
| | | | | US | 2023-0279279 | A1 | 07 September 2023 |
| | | | | WO | 2022-005244 | A1 | 06 January 2022 |
| KR | 10-2125892 | B1 | 08 July 2020 | CN | 105103046 | A | 25 November 2015 |
| | | | | CN | 112285980 | A | 29 January 2021 |
| | | | | EP | 2965147 | A2 | 13 January 2016 |
| | | | | EP | 2965147 | B1 | 01 January 2020 |
| | | | | JP | 2016-510907 | A | 11 April 2016 |
| | | | | JP | 6527471 | B2 | 05 June 2019 |
| | | | | KR | 10-2015-0123901 | A | 04 November 2015 |
| | | | | US | 10114264 | B2 | 30 October 2018 |
| | | | | US | 2016-0033807 | A1 | 04 February 2016 |
| | | | | WO | 2014-135240 | A2 | 12 September 2014 |
| | | | | WO | 2014-135240 | A3 | 31 December 2014 |
| KR | 10-2231178 | B1 | 24 March 2021 | CN | 105683822 | A | 15 June 2016 |
| | | | | CN | 105683822 | B | 01 October 2019 |
| | | | | EP | 3058421 | A1 | 24 August 2016 |
| | | | | EP | 3058421 | B1 | 03 April 2019 |
| | | | | JP | 2016-536634 | A | 24 November 2016 |
| | | | | KR | 10-2016-0071459 | A | 21 June 2016 |
| | | | | US | 10336940 | B2 | 02 July 2019 |
| | | | | US | 2016-0257885 | A1 | 08 September 2016 |
| | | | | WO | 2015-055274 | A1 | 23 April 2015 |
| KR | 10-2011-0063271 | A | 10 June 2011 | KR | 10-1728145 | B1 | 19 April 2017 |
| KR | 10-2234246 | B1 | 01 April 2021 | CN | 105377995 | A | 02 March 2016 |
| | | | | CN | 105377995 | B | 04 September 2018 |
| | | | | EP | 3004251 | A1 | 13 April 2016 |
| | | | | EP | 3004251 | B1 | 13 March 2019 |
| | | | | JP | 2016-522442 | A | 28 July 2016 |
| | | | | JP | 6563384 | B2 | 21 August 2019 |
| | | | | KR | 10-2016-0013980 | A | 05 February 2016 |
| | | | | US | 10344217 | B2 | 09 July 2019 |
| | | | | US | 2016-0108317 | A1 | 21 April 2016 |
| | | | | WO | 2014-187529 | A1 | 27 November 2014 |

Form PCT/ISA/210 (patent family annex) (July 2022)

**EP 4 674 927 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230026100

- EP 0022311 A

**Non-patent literature cited in the description**

- **D. PODOLSKYY et al.** Simple method for accurate measurements of the cholesteric pitch using a ''stripe-wedge Grandjean-Cano cell. *Liquid Crystals*, July 2008, vol. 35 (7), 789-791